# EUROPEAN PATENT SPECIFICATION

(11) **EP 3 501 080 B1**
(45) Date of publication and mention of the grant of the patent: **29.04.2020**
(21) Application number: 17761435.1
(22) Date of filing: 28.08.2017
(51) Int. Cl.: H02J 3/38, H02J 3/16, H02J 3/46, F03D 7/04

(54) **REACTIVE POWER PRODUCTION OF WIND TURBINE GENERATORS WITHIN WIND WAKE ZONE**
REAKTIVE ENERGIEERZEUGUNG VON WINDTURBINENGENERATOREN INNERHALB EINER WINDWIRBELZONE
PRODUCTION D'ÉNERGIE RÉACTIVE DE GÉNÉRATEURS ÉOLIENS DANS UNE ZONE DE SILLAGE DU VENT

(30) Priority: 16.09.2016 DK PA201670717
(43) Date of publication of application: 26.06.2019
(73) Proprietor: Vestas Wind Systems A/S, 8200 Aarhus N (DK)
(72) Inventor: BJØRN, Hans Kristian, 8870 Langå (DK); MØLLER, Torben Werge, 6950 Ringkøbing (DK)
(74) Representative: Vestas Patents Department
(86) International application number: PCT/DK2017/050274
(87) International publication number: WO 2018/050185

(56) References cited:
- EP-A1- 2 582 975
- EP-A1- 3 023 636
- WO-A2-2015/189032
- US-A1- 2016 215 759
- ZHANG BAOHUA ET AL: "A Reactive Power Dispatch Strategy With Loss Minimization for a DFIG-Based Wind Farm", IEEE TRANSACTIONS ON SUSTAINABLE ENERGY, IEEE, USA, vol. 7, no. 3, 1 July 2016 (2016-07-01), pages 914-923, XP011614408, ISSN: 1949-3029, DOI: 10.1109/TSTE.2015.2509647 [retrieved on 2016-06-17]
- TIAN J ET AL: "Active power dispatch method for a wind farm central controller considering wake effect", IECON 2014 - 40TH ANNUAL CONFERENCE OF THE IEEE INDUSTRIAL ELECTRONICS SOCIETY, IEEE, 29 October 2014 (2014-10-29), pages 5450-5456, XP032739043, DOI: 10.1109/IECON.2014.7049333 [retrieved on 2015-02-24]

## Description

### BACKGROUND

### Field of the Disclosure

Embodiments presented in this disclosure generally relate to techniques for controlling reactive power production of wind turbines experiencing a wake effect from other wind turbines.

### Description of the Related Art

Modern power generation and distribution networks increasingly rely on renewable energy sources, such as wind turbines. In some cases, the wind turbines may be substituted for conventional, fossil fuel-based generators. Beyond merely generating and delivering active electrical power to the electrical grid, the wind turbines are responsible for contributing reactive electrical power to support grid stability through voltage regulation. However, operational conditions of the wind turbine generators as well as natural variations in wind conditions can affect the ability of wind turbines to predictably deliver power. Additionally, wind conditions may at times be unsuitable for generating power.

Within a wind power plant, as an upstream wind turbine generator extracts energy from the wind, the upstream wind turbine forms a downstream wake having reduced wind speeds. These reduced wind speeds generally cause decreased active power production of any downstream wind turbine generator(s) disposed within the wake of the upstream wind turbine generator, resulting in lost power production from the downstream wind turbine generator(s). The impact of the wake is discussed in the articles Zhang Baohua et al.: "A Reactive Power Dispatch Strategy With Loss Minimization for a DFIG-Based Wind Farm",IEEE TRANSACTIONS ON SUSTAINABLE ENERGY, IEEE, USA, vol. 7, no. 3, 1 July 2016 (2016-07-01), pages 914-923, XP011614408, ISSN: 1949-3029, DOI: 10.1109/TSTE.2015.2509647; Tian J et al.: "Active power dispatch method for a wind farm central controller considering wake effect",IECON 2014 - 40TH ANNUAL CONFERENCE OF THE IEEE INDUSTRIAL ELECTRONICS SOCIETY, IEEE, 29 October 2014 (2014-10-29), pages 5450-5456, XP032739043,DOI: 10.1109/IECON.2014.7049333 and patent documents EP 3 023 636 A1, WO 2015/189032 A2, EP 2 582 975 A1 and US 2016/215759 A1. Optimization strategies that take into account wake effects are also disclosed.

### SUMMARY

One embodiment of the present invention is a method of controlling power production of a wind power plant comprising a plurality of wind turbine generators (WTGs) according to claim 1.

The method allows downstream wind turbine generators experiencing wake effects caused by one or more upstream wind turbine generators to produce increased reactive power, which contributes to the stability of the electrical grid through voltage regulation. The wind power plant is used to deliver specific active and reactive power levels to a point of common coupling (PCC). To meet the desired reactive power level, in some conventional implementations each WTG of the wind power plant is requested to deliver a same reactive power output. According to embodiments disclosed herein, WTGs disposed within the wind wake zone are controlled to provide a relatively greater reactive power than WTGs outside the wind wake zone. Since the wind wake zone at a site of the wind power may remain relatively stable due to a predominant wind direction at the site, a relatively stable set of WTGs within the wind power plant may consistently see reduced wind speeds. The set of WTGs can be set to deliver the relatively greater reactive power.

The production of reactive power from a WTG while producing active power at its rated active power level can cause significant fatiguing of the electrical power components and generator of the WTG. Described another way, a WTG producing 2,000 kilowatts (kW) and 200 kilovolt-amperes (kVAr) would have higher operational temperatures when compared with power production at 2,000 kW and 0 kVAr. The higher operational temperatures generally correlate to an increased rate of fatigue of the WTG. As a result, using WTGs having relatively lower active power output to contribute relatively more reactive power will keep operational temperatures as low as possible, and therefore has a positive effect on component lifetimes. This tends to reduce the operational costs (or OPEX) of the wind power plant, and tends to provide an increased thermal reserve for the components of the WTGs. This increased thermal reserve can be used to provide an increased active power production and/or more robustness to compensate for voltage or frequency variations on a weak electrical grid that is coupled with the wind power plant at the PCC. In this way, the additional reactive power delivered to the electrical grid may provide increased revenue for the wind power plant operator, and may enable other wind turbine generators within the wind power plant to be operated at greater active power levels.

Another embodiment of the present invention is a computer program product comprising a non-transitory computer-readable storage medium containing code according to claim 7.

The computer program product can perform monitoring of the WTGs and determine, based on the active power production of the WTGs, which WTGs should deliver relatively greater levels of reactive power. In some embodiments, the computer program product is implemented within a power plant controller, and provides an accurate solution for obtaining similar results and benefits as the method of controlling power production discussed above.

Another embodiment of the present invention is a wind power plant comprising a plurality of wind turbine generators according to claim 13.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a diagrammatic view of a horizontal-axis wind turbine, according to one or more embodiments.
Figure 2 illustrates a wind power plant and associated controller, according to one or more embodiments.
Figure 3 illustrates an exemplary operational characteristic of a wind turbine generator, according to one or more embodiments.
Figure 4 illustrates a method of controlling power production of a wind power plant, according to one or more embodiments.
Figure 5 illustrates a method of controlling power production of a wind power plant using a measured wind direction and a forecasted wind direction, according to one or more embodiments.
Figure 6 illustrates a wind wake zone corresponding to a wind turbine generator, according to one or more embodiments.
Figure 7 illustrates a wind wake zone corresponding to a plurality of wind turbine generators of a wind power plant, according to one or more embodiments.
Figure 8 illustrates wind wake zones corresponding to measured wind direction and forecasted wind directions, according to one or more embodiments.

To facilitate understanding, identical reference numerals have been used, where possible, to designate identical elements that are common to the figures.

### DESCRIPTION OF EXAMPLE EMBODIMENTS

Embodiments are generally directed to techniques of controlling power production of a wind power plant comprising a plurality of wind turbine generators. The method comprises defining, based on received wind information, a wind wake zone comprising one or more first wind turbine generators of the plurality of wind turbine generators. The method further comprises increasing a reactive power production of at least one of the first wind turbine generators of the wind wake zone.

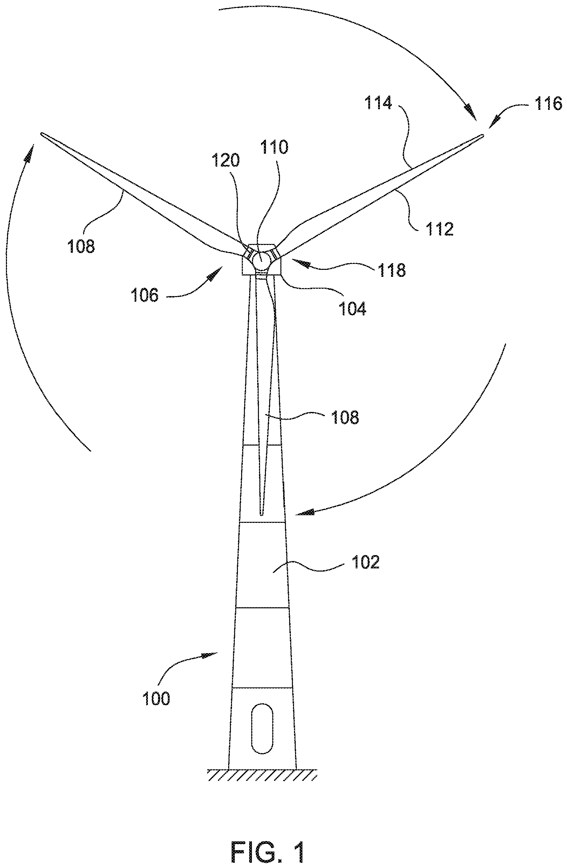

Figure 1 illustrates a diagrammatic view of a horizontal-axis wind turbine (WTG) 100. The wind turbine 100 typically includes a tower 102 and a nacelle 104 located at the top of the tower 102. A wind turbine rotor 106 may be connected with the nacelle 104 through a low speed shaft extending out of the nacelle 104. As shown, the wind turbine rotor 106 includes three rotor blades 108 mounted on a common hub 110, but may include any suitable number of blades, such as one, two, four, five, or more blades. The blade 108 (or airfoil) typically has an aerodynamic shape with a leading edge 112 for facing into the wind, a trailing edge 114 at the opposite end of a chord for the blade 108, a tip 116, and a root 118 for attaching to the hub 110 in any suitable manner. For some embodiments, the blades 108 may be connected to the hub 110 using pitch bearings 120 such that each blade 108 may be rotated around its longitudinal axis to adjust the blade's pitch.

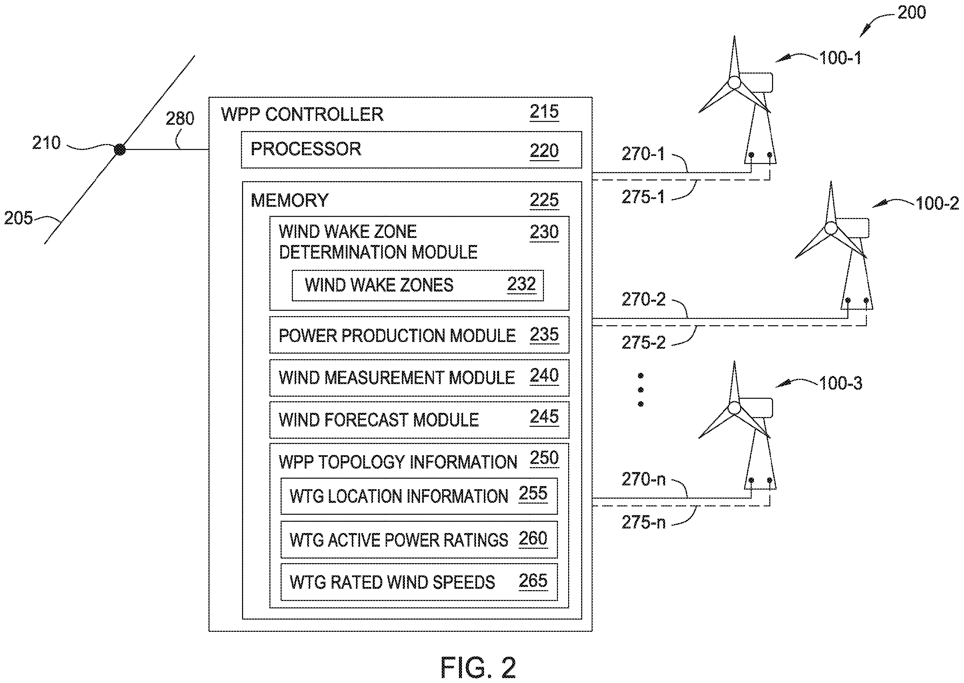

Figure 2 illustrates a wind power plant and associated controller, according to one or more embodiments. In general, a wind power plant may also be referred to as a wind farm or wind park. The wind power plant (WPP) 200 comprises a plurality of wind turbine generators (WTGs) 100-1, 100-2, ..., 100-n (generically referred to as WTG 100) that is operatively connected with an electrical grid 205 at a point of common coupling (PCC) 210. The electrical grid 205 represents any suitable electrical transmission and/or distribution grids, which may be operated at one or more voltage levels. The electrical grid 205 generally includes a number of transmission lines, transformers, substations, etc.

Each WTG 100-1, 100-2, ..., 100-n includes an electrical generator (not shown) configured to convert the mechanical energy of the wind turbine rotor 106 into one or more phases of electrical power. The electrical generators may be of any suitable type, such as induction generators (IG), permanent magnet generators (PMG), etc., as would be known to a person skilled in the art. Each WTG 100-1, 100-2, ..., 100-n provides a respective power output 270-1, 270-2, ..., 270-n that is delivered to the electrical grid 205 and ultimately to any electrical loads connected therewith.

The operation of the wind power plant 200 is controlled using a control arrangement including a WPP controller 215 (also power plant controller, or PPC). The WPP controller 215 is communicatively coupled with each WTG 100 using connections 275-1, 275-2, ..., 275-n. In one embodiment, each WTG 100 comprises a respective WTG controller (not shown) configured to communicate with the WPP controller 215 over a corresponding connection 275-1, 275-2, ..., 275-n. The connections 275-1, 275-2, ..., 275-n generally represents any suitable communication means, whether wire-based or wireless. In various embodiments, the WTGs 100 produce electrical power based on control signals transmitted by the WPP controller 215 over the connections 275-1, 275-2, ..., 275-n. In turn, each WTG 100 may provide feedback signals and/or other information to the WPP controller 215 using the same connections 275-1, 275-2, ..., 275-n.

The plant power output 280 is controlled by the WPP controller 215 and represents a collective power output delivered to the electrical grid 205 by the WPP 200. In one embodiment, the plant power output 280 is an aggregation of the various WTG power outputs 270-1, 270-2, ..., 270-n. In another embodiment the plant power output 280 can include, in addition to the power outputs 270-1, 270-2, ..., 270-n, effects from signal conditioning and/or the operation of other power sources or loads controlled by the WPP controller 215, such as energy storage devices.

The WPP controller 215 includes at least one processor 220 and memory 225. The processor 220 may have any suitable form, such as a general purpose microprocessor, a controller, an application-specific integrated circuit (ASIC), and so forth. Memory 225 may include a variety of computer-readable media selected for their size, relative performance, or other capabilities: volatile and/or non-volatile media, removable and/or non-removable media, etc.

Memory 225 includes program code that is executable by the processor 220 to perform various functions described herein. The functions are described as one or more individual modules, which in some embodiments include distinct program code for performing the different functions. The individual modules may communicate with each other through transmitted signals and/or shared portions of memory 225. While the modules are depicted as being performed by the WPP controller 215, other embodiments may include different configurations of the modules. For example, in example alternate configurations, some or all of the functionality of the WPP controller 215, such as wind measurement module 240, may be included partly or fully within individual WTG controllers and information generated by the wind measurement module 240 communicated with the WPP controller 215.

As shown, the WPP controller 215 comprises a wind wake zone determination module 230, a power production module 235, a wind measurement module 240, and a wind forecast module 245. The WPP controller 215 further comprises WPP topology information 250 representing any information suitable for describing the configuration and operation of the WPP 200. As shown, the WPP topology information 250 includes WTG location information 255, WTG active power ratings 260, and WTG rated wind speeds 265. The WTG location information 255 describes a relative disposition of the WTGs 100 within the WPP 200, such as distances between WTGs 100 and directional information. In some cases, the WTG location information 255 includes geographic coordinates of the individual WTGs 100. The location information 255 may further include topography information describing the geographic terrain and/or man-made features relative to the WTGs 100.

Each WTG 100 has a respective WTG active power rating 260 which can be produced at wind speeds at or greater than a WTG rated wind speed 265 of the WTG 100. In some embodiments, the WTGs 100 may also be temporarily overrated, meaning that the WTG 100 produces more active power than the WTG active power rating 260 for a given wind speed during full load operation. When overrated, the WTG 100 is generally run more aggressively than normal. For wind speeds between a cut-in speed and the corresponding WTG rated wind speed 265, the WTG 100 generally produces an active power less than the WTG active power rating 260.

The wind measurement module 240 is configured to receive signals from sensors disposed in or throughout the WPP 200, and to determine one or more parameters describing the wind conditions at the WPP 200 and/or the individual WTGs 100 based on the received signals. In some embodiments, each WTG 100 includes one or more sensors for determining local wind speed and/or direction. The WPP 200 may additionally or alternately include sensors apart from the WTGs 100 (e.g., standalone, located at a substation of the WPP 200, and so forth). Any suitable sensors may be employed such as mechanical anemometers (e.g., cup and/or vane), ultrasonic anemometers, light-based anemometers, pressure anemometers, and so forth.

The wind forecast module 245 is configured to estimate wind conditions at the WPP 200 and/or the individual WTGs 100 for one or more future points of time. The wind forecast module 245 may generally use any suitable modeling techniques that are known to the person of ordinary skill in the art. In some embodiments, the wind forecast module 245 generates estimated parameters such as wind directions and wind speeds that correspond to discrete times. In an alternate embodiment, the wind forecast module 245 may be disposed outside of the WPP 200, and the estimated parameters are communicated with the WPP controller 215 through a network connection.

The wind wake zone determination module 230 is configured to define one or more wind wake zones 232 within the WPP 200 based on received wind information and the WPP topology information 250. The received wind information comprises one or both of information provided by the wind measurement module 240 and information provided by the wind forecast module 245. In one embodiment, the wind wake zones 232 include a wind wake zone 232 corresponding to a measured wind direction (e.g., using information from wind measurement module 240), and at least one predicted wind wake zone 232 corresponding to a forecasted wind direction (e.g., using information from wind forecast module 245). A "wind wake zone" as defined herein describes a two-dimensional area or a three-dimensional volume, disposed downstream from one or more WTGs 100, that experiences (or is predicted to experience) a wake effect caused by the one or more WTGs 100. In some embodiments, a wind wake zone 232 defined for the WPP 200 comprises a plurality of wind wake zones formed by individual WTGs 100. Based on the wind direction and the WPP topology information 250, the wind wake zones of individual WTGs 100 may be non-overlapping or overlapping. Any WTGs 100 of the WPP 200 that are disposed within a wind wake zone 232 have at least a predetermined reduction of active power production by virtue of the wake effect. For example, as each WTG 100 extracts energy from the wind, the wind speed is reduced within the downstream wake of the WTG 100. The wind within the wake may also tend to be more turbulent. The reduced wind speeds within the defined wind wake zone(s) 232 generally correspond to a reduced active power production of any WTGs 100 that are disposed within a wind wake zone 232. As the wind continues further downstream from the WTG 100, the reduced-speed wake generally disperses until the wind speed again reaches its free stream velocity.

In some embodiments, the wind speeds at one or more upstream WTGs 100 meet or exceed the WTG rated wind speeds 265, such that the upstream WTGs 100 are capable of producing active power at the corresponding WTG active power rating 260. In contrast, the wind speeds at one or more downstream WTGs 100 (specifically, within a wind wake zone 232 downstream of at least one of the upstream WTGs 100) are less than the WTG rated wind speeds 265 of the downstream WTGs 100, such that the downstream WTGs 100 produce an active power less than the corresponding WTG active power ratings 260. In such a case, the predetermined reduction of active power production for the downstream WTGs 100 comprises an active power production at levels less than the corresponding WTG active power ratings 260. Further, in this case, the wind speed information corresponding to the downstream WTGs 100 (i.e., indicating that the downstream WTGs 100 will produce an active power less than their rated powers) may be used to define the wind wake zone 232.

In other embodiments, the predetermined reduction of active power production for the downstream WTGs 100 comprises a reduction of a predetermined amount. For example, say each WTG 100 is rated to produce 1.5 kilowatts (kW) of active power but current wind conditions at the WPP 200 are such that each WTG 100 can ideally produce only 1.0 kW. Further, while the upstream WTGs 100 may be capable of producing 1.0 kW under these conditions, those WTGs 100 within wind wake zones 232 are unable to produce the ideal 1.0 kW. In such a case, the wind wake zones 232 can be defined to include WTGs 100 whose active power production differs from the upstream WTGs 100 by at least a predetermined amount. The difference in active power production may be defined in absolute terms (e.g., the wind wake zone 232 is defined to include WTGs 100 producing at least 0.2 kW less than the ideal active power production under the current wind conditions) or as a fraction or percentage (e.g., the wind wake zone 232 is defined to include WTGs 100 producing at least 15% less active power than the ideal active power production).

The reduction of active power production for WTGs 100 disposed within a wind wake zone 232 generally corresponds to an increase in the reactive power production capability of those WTGs 100. In some embodiments, the increased reactive power production capability of a WTG 100 corresponds to a predefined active power range relative to a rated active power of the WTG 100. In one non-limiting example, for a rated active power of 2,000 kW, the WTG 100 is controlled to have an increased reactive power production between about 1,400 kW and 2,000 kW. In this way, the WTGs 100 disposed within a wind wake zone 232 may contribute a greater amount of reactive power within the WPP 200. In some cases, the additional amount of reactive power may be delivered by the WPP 200 to the electrical grid 205 for voltage regulation purposes, which can result in increased revenue for the operator of the WPP 200. In other cases, the additional amount of reactive power may enable other WTGs 100 of the WPP 200 to be operated at greater active power levels as relatively less reactive power production is required for the other WTGs 100. As discussed above, the greater thermal reserve of the WTGs 100 can generally be used to increase robustness and reduce OPEX of the WPP 200, and/or enables the WTGs 100 to deliver a greater active power. Other constraints may apply to increased active power production of the WTGs 100 such as aerodynamic constraints, mechanical loads, etc.

The wind wake zones 232 generated by the wind wake zone determination module 230 may be represented in any suitable form within memory 225. Some non-limiting examples include two-dimensional areas (e.g., corresponding to a top-down view of the WPP 200), three-dimensional volumes, and lists of one or more WTGs 100 included in the wind wake zones 232. In some embodiments, the wind wake zones 232 are adaptively updated by the wind wake zone determination module 230, e.g., based on new wind measurements provided by the wind measurement module 240 and/or forecasts provided by the wind forecast module 245.

Further, in some embodiments, the wind wake zone determination module 230 determines one or more WTGs 100 that are common to different wind wake zones 232 (such as a first wind wake zone 232 based on a current wind measurement and a second, predicted wind wake zone based on forecasted wind conditions). In this way, increasing the reactive power of the common one or more WTGs 100 increases the likelihood that a subsequent reactive power increase for different WTGs 100 will not be required when the wind wake zones 232 are updated, e.g., based on updated wind measurements. It is also possible that, based on the arrangement of the WPP 200 reflected in WPP location information 255, a particular WTG 100 may fall within wind wake zones 232 relative to various other WTGs 100 for all wind direction values. In these different embodiments, WTG(s) 100 in common between different wind wake zones may be designated as "preferred" WTGs that are used first to fulfill a reactive power increase within the WPP 200. If the requested reactive power increase exceeds the amount that can be provided by the preferred WTGs, one or more non-preferred WTGs may have their reactive power production increased to meet the request. For example, the non-preferred WTGs may include WTGs 100 included in a first wind wake zone 232 but not a subsequent second wind wake zone 232, and may further include WTGs that are not included in any wind wake zone 232.

The power production module 235 is configured to generate set points or other suitable power demand signals for controlling the active and reactive power produced by each of the WTGs 100-1, 100-2, ..., 100-n of the WPP 200. In some embodiments, the power production module 235 applies a selected one of a plurality of predetermined control algorithms to control the power production of the WTGs 100. In some cases, the power module 235 generates the set points based on a received or generated WPP-level power demand signal, such as WPP power output set points, which can be input to the selected control algorithm. The generated set points may be transmitted by the WPP controller 215 to individual WTG controllers using the connections 275-1, 275-2, ..., 275-n.

The power production module 235 is configured to communicate power demand signals based on the current and/or forecast wind wake zones 232. More specifically, the power production module 235 is configured to increase a reactive power production of at least one WTG 100 included within a wind wake zone 232. In some embodiments, increasing the reactive power production comprises transmitting an increased reactive power set point to a particular WTG 100 upon determining the WTG 100 is included within a wind wake zone 232. The power production module 235 is further configured to update the power set points based on updates or changes to the composition of the wind wake zone 232, e.g., due to a change in wind direction. For example, the power production module 235 may transmit a reduced reactive power set point to the WTG 100 upon determining that the WTG 100 is no longer included within the wind wake zone 232.

In some embodiments, the relative amounts of reactive power increases for multiple WTGs 100 included in a particular wind wake zone 232 are based on the corresponding WTG active power ratings 260. For example, in a wind wake zone 232 comprising a first WTG 100 with a higher rated power than a second WTG 100, the first WTG 100 may be assigned a lesser portion of the collective reactive power increase than the second WTG 100. In one embodiment, the difference in the assigned portions is proportional to the difference in the rated powers of the WTGs 100. For example, say the first WTG 100 has a 20% larger rated power than the second WTG 100. For a given collective reactive power increase of the WPP 200, the first WTG 100 may be assigned a reactive power increase that is 20% less than that assigned to the second WTG 100. In another embodiment, the reactive power production of a WTG(s) 100 with higher rated powers is preferentially increased before increasing the reactive power production of other WTGs 100. Other distribution schemes are also possible, e.g., an equal distribution of the reactive power increase among WTGs 100 in the wind wake zone 232.

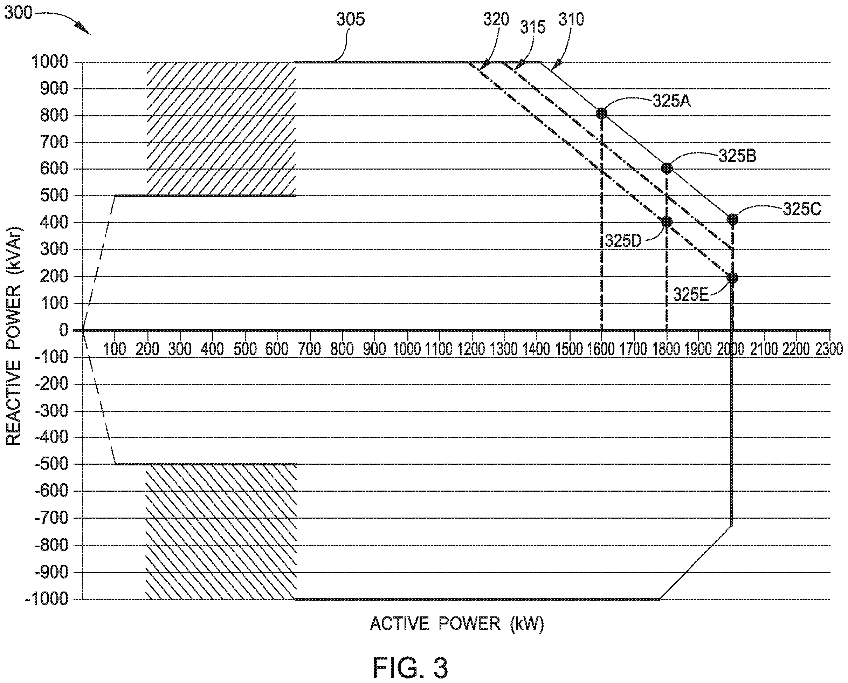

Figure 3 illustrates an exemplary operational characteristic of a wind turbine generator, according to one or more embodiments. More specifically, chart 300 includes a plot 305 that illustrates suitable operational points for WTGs of a wind power plant, such as the WTGs 100 of WPP 200 depicted in Figure 2. In the non-limiting example shown in chart 300, the WTG has a rated active power of 2,000 kW. In some embodiments, the WTGs of the wind power plant have similar operational characteristics (e.g., same rated active power and operating according to plot 305). In other embodiments, at least some WTGs of the wind power plant have different operational characteristics (e.g., different rated active power and/or a different plot).

Plot 305 includes a section 310 showing de-rated operation of the wind turbine. In other words, when producing less than rated active power the wind turbine may operate at various operational points along the section 310, such as the operational points 325A, 325B, 325C depicted. As discussed above, to increase a thermal reserve of the WTG, the WTG may be operated with less reactive power production for a given active power value, such as according to an alternate section 315, 320. Operating the WTG along alternate section 315 provides a greater thermal reserve than operating along section 310, and operating along alternate section 320 provides a greater thermal reserve than operating along alternate section 315. Based on the slope of the section 310 and alternate sections 315, 320, when considering the combined reactive power output of the WPP, it can be advantageous to operate WTGs with reduced active power (e.g., WTGs included in the wind wake zone) to provide relatively greater amounts of reactive power.

In one non-limiting example, a wind power plant includes six WTGs having a rated active power of 2,000 kW. Three WTGs of the six WTGs are each producing their rated active power. The other three WTGs are de-rated and are each producing 1,800 kW of active power. For example, the three de-rated WTGs may be located within a wind wake zone formed downstream of one or more of the WTGs producing rated active power.

In this example, the wind power plant is required to provide a reactive power output of 2,400 kVAr. In some conventional implementations of the wind power plant, each of the six WTGs are controlled to provide an equal reactive power production (e.g., 400 kVAr each) to meet the WPP requirement. Thus, the three de-rated WTGs are operating at operational point 325D, and the three WTGs producing rated active power are operating at operational point 325C. Operating the three WTGs at operational point 325C generally leaves no thermal reserve for these WTGs.

In some embodiments, however, those WTGs operating with reduced active power production (1,800 kW) are controlled to provide a relatively greater amount of reactive power production than the WTGs producing 2,000 kW. For example, the WTGs producing 1,800 kW of active power are operated at operational point 325B to each provide 600 kVAr (for a collective 1,800 kVAr), and the WTGs producing 2,000 kW of active power are operated at operational point 325E to each provide 200 kVAr (for a collective 600 kVAr). In these embodiments, the WTGs operated at both operational points 325B, 325E each have some amount of thermal reserve, which can increase robustness and reduce OPEX of the WPP and/or enables the WTG to deliver a greater active power.

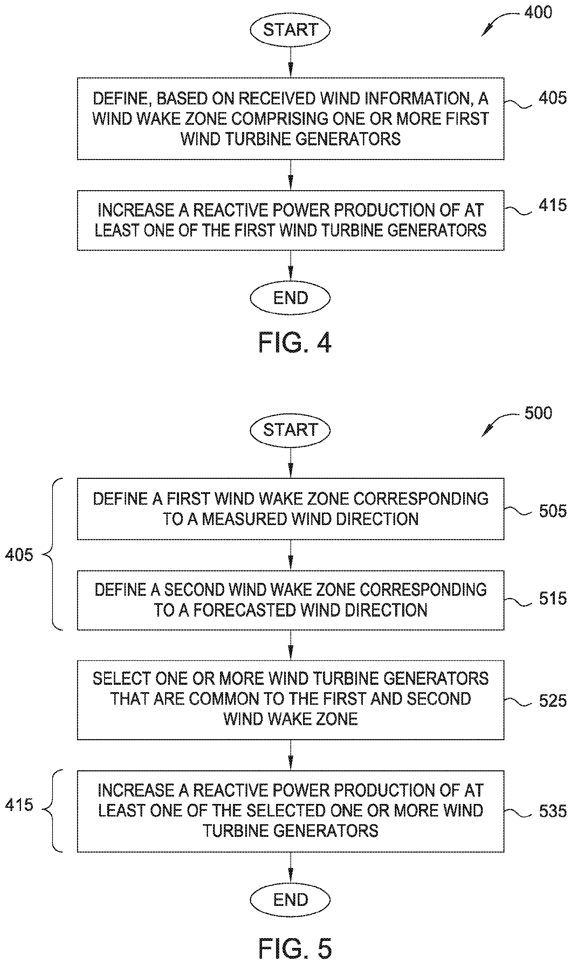

Figure 4 illustrates a method of controlling power production of a wind power plant, according to one or more embodiments. Method 400 may be used in conjunction with features of other embodiments discussed herein. In some cases, the method 400 is implemented in the WPP controller 215 (depicted in Figure 2) of a WPP 200 comprising a plurality of WTGs 100.

Method 400 begins at block 405, where a wind wake zone is defined based on received wind information. The wind wake zone comprises one or more first WTGs of the plurality of WTGs. The wind information comprises one or both of measured wind information and forecasted wind information, such as a measured wind direction and/or forecasted wind direction. At block 415, a reactive power production of at least one of the first WTGs within the wind wake zone is increased. In some embodiments, relative amounts of reactive power increase for the at least one of the first WTGs is based on the relative active power ratings of the first WTGs. Method 400 ends following completion of block 415.

Figure 5 illustrates a method of controlling power production of a wind power plant using a measured wind direction and a forecasted wind direction, according to one or more embodiments. Method 500 represents one non-limiting example of the method 400 of Figure 4, and may be performed by the WPP controller 215 depicted in Figure 2. Further, the method 500 may be used in conjunction with features of other embodiments discussed herein.

Method 500 begins at block 505, where a first wind wake zone corresponding to a measured wind direction is defined. At block 515, a second wind wake zone corresponding to a forecasted wind direction is defined. Blocks 505 and 515 collectively provide one non-limiting example of block 405 of method 400. Additional wind wake zone(s) may further be defined corresponding to other measured and/or forecasted wind direction(s).

At block 525, one or more WTGs that are common to the first and second wind wake zones are selected. At block 535, a reactive power production of at least one of the selected one or more wind turbine generators is increased. Block 535 provides a non-limiting example of block 415 of method 400. Method 500 ends following completion of block 535.

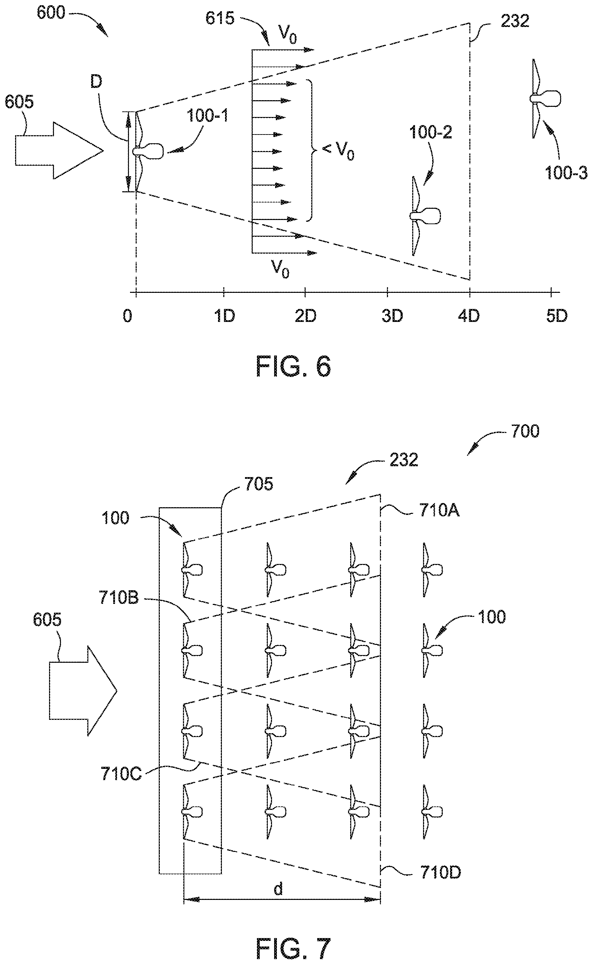

Figure 6 illustrates a wind wake zone corresponding to a wind turbine generator, according to one or more embodiments. The arrangement 600 illustrates a two-dimensional, top-down view of a plurality of WTGs 100-1, 100-2, 100-3 of a wind power plant. Arrow 605 indicates a current wind direction as measured by one or more sensors associated with the wind power plant. Based on the current wind direction, WTG 100-1 is upstream of WTGs 100-2 and 100-3.

The wake effect due to operation of WTG 100-1 is illustrated as wind wake zone 232 and plot 615. As WTG 100-1 extracts energy from the wind, the wind speed is reduced from an initial wind speed (v₀) at points outside the wind wake zone 232 to wind speeds that are less than v₀ (< v₀) within the wind wake zone 232. Generally, the values of wind speed decrease further from the edges of the wind wake zone 232. As shown, the wind wake zone 232 extends to a predetermined distance from the WTG 100-1. In some embodiments, the wind wake zone 232 is defined as extending to a predetermined multiple of a diameter (D) of the rotor.

WTG 100-2 is shown as disposed within the wind wake zone 232, and has at least a predetermined reduction of active power production by virtue of the reduced wind speeds caused by the wake effect. WTG 100-3 is shown as disposed outside the wind wake zone 232 and is generally capable of active power production levels corresponding to the initial wind speed v₀.

Figure 7 illustrates a wind wake zone corresponding to a plurality of wind turbine generators of a wind power plant, according to one or more embodiments. More specifically, arrangement 700 shows an interaction of a plurality of component wind wake zones of individual WTGs.

Arrangement 700 illustrates a plurality of sixteen WTGs 100 arranged in a plurality of rows and columns. While the WTGs 100 are shown as being substantially equally spaced in a 4x4 grid, the arrangement 700 is presented for simplicity of description and any alternate suitable arrangement of the WTGs 100 is also possible. For example, the various WTGs 100 may be disposed with an irregular arrangement.

Based on the current wind direction indicated by arrow 605, the wind wake zone 232 comprises component wind wake zones 710A, 710B, 710C, 710D that are formed by a group 705 of a plurality of upstream WTGs 100 and extends to a predetermined distance (d) from the upstream WTGs 100. As shown, the component wind wake zones 710A, 710B, 710C, 710D partially overlap, but in other embodiments at least one of the component wind wake zones is non-overlapping with other component wind wake zones.

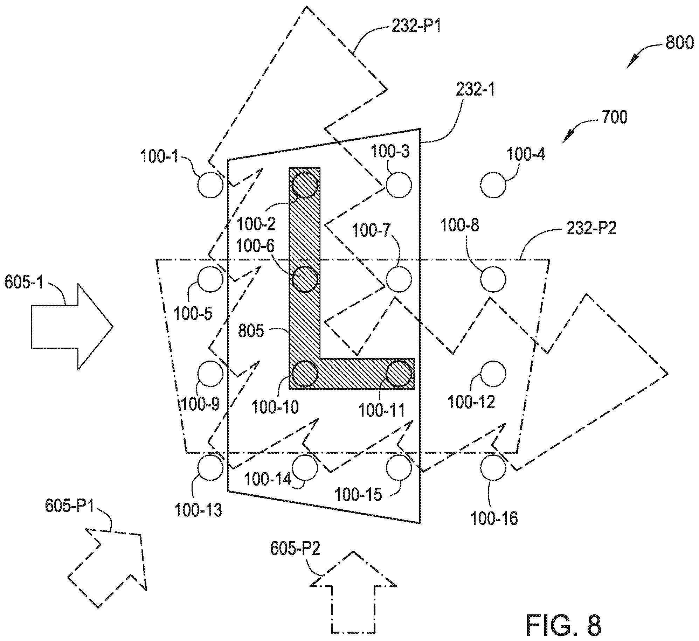

Figure 8 illustrates wind wake zones corresponding to measured wind direction and forecasted wind directions, according to one or more embodiments. Arrangement 800 includes a plurality of sixteen WTGs 100-1 to 100-16 arranged in a plurality of rows and columns, similar to the arrangement 700 of Figure 6. At a first time, a first wind direction 605-1 is determined and a first wind wake zone 232-1 is defined comprising WTGs 100-2, 100-3, 100-6, 100-7, 100-10, 100-11, 100-14, and 100-15. Forecast wind information is used to determine a first predicted (or forecasted) wind direction 605-P1 (shown with a dashed line) corresponding to a second time. A first predicted wind wake zone 232-P1 (shown with a dashed line) is defined based on the first predicted wind direction 605-P1 and comprises WTGs 100-2, 100-6, 100-10, 100-11, 100-12. The forecast wind information is further used to determine a second predicted (or forecasted) wind direction 605-P2 (shown with a dash-dot line) corresponding to a third time. A second predicted wind wake zone 232-P2 (shown with a dash-dot line) is defined based on the first predicted wind direction 605-P2 and comprises WTGs 100-5 through 100-12.

In some embodiments, a group 805 of one or more WTGs 100 that are common to the first wind wake zone 232-1 and the first predicted wind wake zone 232-P1 are identified. As shown, group 805 comprises WTGs 100-2, 100-6, 100-10, and 100-11. In some embodiments, WTGs 100 of the group 805 are preferentially selected to increase their reactive power production before increasing reactive power production of other WTGs 100 of the first wind wake zone 232-1 and/or the first predicted wind wake zone 232-P1. In alternate embodiments, the group 805 may reflect one or more WTGs 100 that are common to different ones of the defined wind wake zones. In one example, the group 805 may reflect WTGs 100 common to the first wind wake zone 232-1, the first predicted wind wake zone 232-P1, and the second predicted wind wake zone 232-P2 (as shown, WTGs 100-6, 100-10, and 100-11). In another example, the group 805 may reflect WTGs 100 common to the first and second predicted wind wake zones 232-P1, 232-P2 (as shown, WTGs 100-6 and 100-10 through 100-12).

In the preceding, reference is made to embodiments presented in this disclosure. However, the scope of the present disclosure is not limited to specific described embodiments. Instead, any combination of the preceding features and elements, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the preceding aspects, features, embodiments, and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method, or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects may take the form of a computer program product embodied in one or more computer readable medium(s) having computer readable program code embodied thereon. Program code embodied on a computer readable medium may be transmitted using any appropriate medium, including but not limited to wireless, wireline, optical fiber cable, RF, etc., or any suitable combination of the foregoing.

Aspects of the present disclosure are described above with reference to flowchart illustrations and/or block diagrams of methods, apparatus (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method of controlling power production of a wind power plant (WPP, 200) comprising a plurality of wind turbine generators (WTG, 100, 100-n), the method comprising:
defining, based on received wind information (240, 245), a wind wake zone (232) comprising a group of first wind turbine generators of the plurality of wind turbine generators; and
increasing a reactive power production of at least one of the first wind turbine generators of the wind wake zone, wherein a reactive power production is increased for at least two of the one or more first wind turbine generators, wherein an amount of reactive power increase of the at least two of the one or more first wind turbine generators is based on relative active power ratings of the at least two of the one or more first wind turbine generators, so that at least two of the one or more first wind turbine generators disposed within the wind wake zone are controlled to provide a relatively greater reactive power than wind turbine generators outside the wind wake zone (232).

2. The method of claim 1, wherein the wind information (240, 245) comprises wind speed information, the method further comprising:
selecting the one or more first wind turbine generators based on a corresponding wind speed less than a rated wind speed of the one or more first wind turbine generators.

3. The method of any of the previous claims, wherein the wind information comprises wind direction information, and wherein the wind wake zone (232) is defined relative to one or more second wind turbine generators of the plurality of wind turbine generators.

4. The method of claim 3, wherein the wind wake zone (232) extends to a predetermined distance downstream from the one or more second wind turbine generators.

5. The method of any of the previous claims, wherein the received wind information (240, 245) comprises one or more of a measured wind direction and a forecasted wind direction.

6. The method of claim 5, wherein the received wind information (240, 245) comprises a measured wind direction and a forecasted wind direction, wherein defining the wind wake zone comprises:
defining a first wind wake zone (232-1) corresponding to the measured wind direction; and
defining a second wind wake zone (232-P2) corresponding to the forecasted wind direction, the method further comprising:
selecting one or more wind turbine generators of the plurality of wind turbine generators that are common to the first and second wind wake zones,
wherein increasing a reactive power production comprises increasing a reactive power production of at least one of the selected one or more wind turbine generators.

7. A computer program product comprising a non-transitory computer-readable storage medium containing code which, when executed by one or more processors, performs an operation for controlling power production of a wind power plant (WPP, 200) comprising a plurality of wind turbine generators (WTG, 100, 100n), the operation comprising:
defining, based on received wind information (240, 245), a wind wake zone (232) comprising a group of first wind turbine generators of the plurality of wind turbine generators; and
increasing a reactive power production of at least one of the one or more first wind turbine generators of the wind wake zone,
wherein a reactive power production is increased for at least two of the one or more first wind turbine generators, wherein an amount of reactive power increase of the at least two of the one or more first wind turbine generators is based on relative active power ratings of the at least two of the one or more first wind turbine generators, so that at least two of the one or more first wind turbine generators disposed within the wind wake zone are controlled to provide a relatively greater reactive power than wind turbine generators outside the wind wake zone (232).

8. The computer program product of claim 7, wherein the wind information (240, 245) comprises wind speed information, the operation further comprising:
selecting the one or more first wind turbine generators based on a corresponding wind speed less than a rated wind speed of the one or more first wind turbine generators.

9. The computer program product of any of the previous claims, wherein the wind information (240, 245) comprises wind direction information, and wherein the wind wake zone is defined relative to one or more second wind turbine generators of the plurality of wind turbine generators.

10. The computer program product of claim 10, wherein the wind wake zone extends to a predetermined distance downstream from the one or more second wind turbine generators.

11. The computer program product of any of the previous claims, wherein the received wind information (240, 245) comprises one or more of a measured wind direction and a forecasted wind direction.

12. The computer program product of claim 11, wherein the received wind information (240, 245) comprises a measured wind direction and a forecasted wind direction, wherein defining the wind wake zone comprises:
defining a first wind wake zone (232-1) corresponding to the measured wind direction; and
defining a second wind wake zone (232-P2) corresponding to the forecasted wind direction, the operation further comprising:
selecting one or more wind turbine generators of the plurality of wind turbine generators that are common to the first and second wind wake zones,
wherein increasing a reactive power production comprises increasing a reactive power production of at least one of the selected one or more wind turbine generators.

13. A wind power plant (WPP, 200), comprising:
a plurality of wind turbine generators (WTG, 100, 100n); and
a wind power plant controller configured to:
define, based on received wind information (240, 245), a wind wake zone (232) comprising a group of first wind turbine generators of the plurality of wind turbine generators; and
increase a reactive power production of at least one of the one or more first wind turbine generators of the wind wake zone,
wherein a reactive power production is increased for at least two of the one or more first wind turbine generators, wherein an amount of reactive power increase of the at least two of the one or more first wind turbine generators is based on relative active power ratings of the at least two of the one or more first wind turbine generators, so that at least two of the one or more first wind turbine generators disposed within the wind wake zone are controlled to provide a relatively greater reactive power than wind turbine generators outside the wind wake zone (232).

## Patentansprüche

1. Verfahren zum Steuern einer Leistungsproduktion eines Windparks (WPP, 200), umfassend eine Vielzahl von Windkraftanlagen (WTG, 100, 100n), das Verfahren umfassend:
Definieren, basierend auf empfangenen Windinformationen (240, 245) einer Windnachlaufströmungszone (232), umfassend eine Gruppe erster Windkraftanlagen der Vielzahl von Windkraftanlagen; und
Erhöhen einer reaktiven Leistungsproduktion zumindest eines der ersten Windkraftanlagen der Windnachlaufströmungszone,
wobei eine reaktive Leistungsproduktion für mindestens zwei des einen oder der mehreren ersten Windkraftanlagen erhöht ist, wobei eine Menge an reaktiver Leistungserhöhung der mindestens zwei des einen oder der mehreren ersten Windkraftanlagen auf relativen aktiven Leistungseinstufungen der mindestens zwei des einen oder der mehreren ersten Windkraftanlagen beruht, sodass mindestens zwei des einen oder der mehreren ersten Windkraftanlagen, die in der Windnachlaufströmungszone angeordnet sind, gesteuert sind, um eine relativ größere reaktive Leistung als Windkraftanlagen außerhalb der Windnachlaufströmungszone (232) bereitzustellen.

2. Verfahren nach Anspruch 1, wobei die Windinformationen (240, 245) Windgeschwindigkeitsinformationen umfassen, das Verfahren weiter umfassend:
Auswählen des einen oder der mehreren ersten Windkraftanlagen basierend auf einer entsprechenden Windgeschwindigkeit, die niedriger als eine Nennwindgeschwindigkeit des einen oder der mehreren ersten Windkraftanlagen ist.

3. Verfahren nach einem der vorstehenden Ansprüche, wobei die Windinformationen Windrichtungsinformationen umfassen und wobei die Windnachlaufströmungszone (232) relativ zu einem oder mehreren zweiten Windkraftanlagen der Vielzahl von Windkraftanlagen definiert ist.

4. Verfahren nach Anspruch 3, wobei die Windnachlaufströmungszone (232) sich zu einem vorbestimmten Abstand stromabwärts des einen oder der mehreren zweiten Windkraftanlagen erstreckt.

5. Verfahren nach einem der vorstehenden Ansprüche, wobei die empfangenen Windinformationen (240, 245) eines oder mehrere einer gemessenen Windrichtung und einer vorhergesagten Windrichtung umfassen.

6. Verfahren nach Anspruch 5, wobei die empfangenen Windinformationen (240, 245) eine gemessene Windrichtung und eine vorhergesagte Windrichtung umfassen, wobei Definieren der Windnachlaufströmungszone umfasst:
Definieren einer ersten Windnachlaufströmungszone (232-1) entsprechend der gemessenen Windrichtung; und
Definieren einer zweiten Windnachlaufströmungszone (232-P2) entsprechend er vorhergesagten Windrichtung, das Verfahren weiter umfassend:
Auswählen eines oder mehrerer Windkraftanlagen der Vielzahl von Windkraftanlagen, die der ersten und zweiten Windnachlaufströmungszone gemein sind,
wobei Erhöhen einer reaktiven Leistungsproduktion ein Erhöhen einer reaktiven Leistungsproduktion zumindest eines des ausgewählten einen oder der ausgewählten mehreren Windkraftanlagen umfasst.

7. Computerprogrammprodukt, umfassend einen nicht transitorisches computerlesbares Speichermedium, das einen Code enthält, wobei, wenn durch einen oder mehrere Prozessoren ausgeführt, einen Betrieb zum Steuern einer Leistungsproduktion eines Windparks (WPP, 200) ausführt, umfassend eine Vielzahl von Windkraftanlagen (WTG, 100, 100n), der Betrieb umfassend:
Definieren, basierend auf empfangenen Windinformationen (240, 245) einer Windnachlaufströmungszone (232), umfassend eine Gruppe erster Windkraftanlagen der Vielzahl von Windkraftanlagen; und
Erhöhen einer reaktiven Leistungsproduktion zumindest eines des einen oder der mehreren Windkraftanlagen der Windnachlaufströmungszone,
wobei eine reaktive Leistungsproduktion für mindestens zwei des einen oder der mehreren ersten Windkraftanlagen erhöht ist, wobei eine Menge an reaktiver Leistungserhöhung der mindestens zwei des einen oder der mehreren ersten Windkraftanlagen auf relativen aktiven Leistungseinstufungen der mindestens zwei des einen oder der mehreren ersten Windkraftanlagen beruht, sodass mindestens zwei des einen oder der mehreren ersten Windkraftanlagen, die in der Windnachlaufströmungszone angeordnet sind, gesteuert sind, um eine relativ größere reaktive Leistung als Windkraftanlagen außerhalb der Windnachlaufströmungszone (232) bereitzustellen.

8. Computerprogrammprodukt nach Anspruch 7, wobei die Windinformationen (240, 245) Windgeschwindigkeitsinformationen umfassen, der Betrieb weiter umfassend:
Auswählen des einen oder der mehreren ersten Windkraftanlagen basierend auf einer entsprechenden Windgeschwindigkeit, die niedriger als eine Nennwindgeschwindigkeit des einen oder der mehreren ersten Windkraftanlagen ist.

9. Computerprogrammprodukt nach einem der vorstehenden Ansprüche, wobei die Windinformationen (240, 245) Windrichtungsinformationen umfassen und wobei die Windnachlaufströmungszone relativ zu einem oder mehreren zweiten Windkraftanlagen der Vielzahl von Windkraftanlagen definiert ist.

10. Computerprogrammprodukt nach Anspruch 10, wobei die Windnachlaufströmungszone sich zu einem vorbestimmten Abstand stromabwärts des einen oder der mehreren zweiten Windkraftanlagen erstreckt.

11. Computerprogrammprodukt nach einem der vorstehenden Ansprüche, wobei die empfangenen Windinformationen (240, 245) eines oder mehrere einer gemessenen Windrichtung und einer vorhergesagten Windrichtung umfassen.

12. Computerprogrammprodukt nach Anspruch 11, wobei die empfangenen Windinformationen (240, 245) eine gemessene Windrichtung und eine vorhergesagte Windrichtung umfassen, wobei Definieren der Windnachlaufströmungszone umfasst:
Definieren einer ersten Windnachlaufströmungszone (232-1) entsprechend der gemessenen Windrichtung; und
Definieren einer zweiten Windnachlaufströmungszone (232-P2) entsprechend er vorhergesagten Windrichtung, der Betrieb weiter umfassend:
Auswählen eines oder mehrerer Windkraftanlagen der Vielzahl von Windkraftanlagen, die der ersten und zweiten Windnachlaufströmungszone gemein sind,
wobei Erhöhen einer reaktiven Leistungsproduktion ein Erhöhen einer reaktiven Leistungsproduktion zumindest eines des ausgewählten einen oder der ausgewählten mehreren Windkraftanlagen umfasst.

13. Windpark (WPP, 200), umfassend:
eine Vielzahl von Windkraftanlagen (WTG, 100, 100n); und
eine Windparksteuerung, konfiguriert zum:
Definieren, basierend auf empfangenen Windinformationen (240, 245) einer Windnachlaufströmungszone (232), umfassend eine Gruppe erster Windkraftanlagen der Vielzahl von Windkraftanlagen; und
Erhöhen einer reaktiven Leistungsproduktion zumindest eines des einen oder der mehreren ersten Windkraftanlagen der Windnachlaufströmungszone,
wobei eine reaktive Leistungsproduktion für mindestens zwei des einen oder der mehreren ersten Windkraftanlagen erhöht ist, wobei eine Menge an reaktiver Leistungserhöhung der mindestens zwei des einen oder der mehreren ersten Windkraftanlagen auf relativen aktiven Leistungseinstufungen der mindestens zwei des einen oder der mehreren ersten Windkraftanlagen beruht, sodass mindestens zwei des einen oder der mehreren ersten Windkraftanlagen, die in der Windnachlaufströmungszone angeordnet sind, gesteuert sind, um eine relativ größere reaktive Leistung als Windkraftanlagen außerhalb der Windnachlaufströmungszone (232) bereitzustellen.

## Revendications

1. Procédé de commande de la production de puissance d'une centrale éolienne (WPP, 200) comprenant une pluralité d'éoliennes (WTG, 100, 100-n), le procédé comprenant les étapes consistant à :
définir, sur la base d'informations relatives au vent reçues (240, 245), une zone de sillage de vent (232) comprenant un groupe de premières éoliennes de la pluralité d'éoliennes ; et
augmenter une production de puissance réactive d'au moins une des premières éoliennes de la zone de sillage de vent,
dans lequel une production de puissance réactive est augmentée pour au moins deux des une ou plusieurs premières éoliennes, dans lequel une quantité d'augmentation de puissance réactive des au moins deux des une ou plusieurs premières éoliennes est basée sur des puissances nominales actives relatives des au moins deux des une ou plusieurs premières éoliennes, de sorte qu'au moins deux des une ou plusieurs premières éoliennes disposées dans la zone de sillage de vent sont commandées pour fournir une puissance réactive relativement plus importante que les éoliennes à l'extérieur de la zone de sillage de vent (232).

2. Procédé selon la revendication 1, dans lequel les informations relatives au vent (240, 245) comprennent des informations de vitesse de vent, le procédé comprenant en outre l'étape consistant à :
sélectionner les une ou plusieurs premières éoliennes sur la base d'une vitesse de vent correspondante inférieure à une vitesse de vent nominale des une ou plusieurs premières éoliennes.

3. Procédé selon l'une quelconque des revendications précédentes, dans lequel les informations relatives au vent comprennent des informations de direction de vent, et dans lequel la zone de sillage de vent (232) est définie par rapport à une ou plusieurs secondes éoliennes de la pluralité d'éoliennes.

4. Procédé selon la revendication 3, dans lequel la zone de sillage de vent (232) s'étend jusqu'à une distance prédéterminée en aval des une ou plusieurs secondes éoliennes.

5. Procédé selon l'une quelconque des revendications précédentes, dans lequel les informations relatives au vent reçues (240, 245) comprennent une ou plusieurs d'une direction de vent mesurée et d'une direction de vent prévue.

6. Procédé selon la revendication 5, dans lequel les informations relatives au vent reçues (240, 245) comprennent une direction de vent mesurée et une direction de vent prévue, dans lequel la définition de la zone de sillage de vent comprend les étapes consistant à :
définir une première zone de sillage de vent (232-1) correspondant à la direction de vent mesurée ; et
définir une seconde zone de sillage de vent (232-P2) correspondant à la direction de vent prévue, le procédé comprenant en outre les étapes consistant à :
sélectionner une ou plusieurs éoliennes de la pluralité d'éoliennes qui sont communes aux première et seconde zones de sillage de vent,
dans lequel l'augmentation d'une production de puissanceréactive comprend une augmentation d'une production de puissance réactive d'au moins l'une des une ou plusieurs éoliennes sélectionnés.

7. Produit de programme informatique comprenant un support de stockage lisible par ordinateur non transitoire contenant un code qui, lorsqu'il est exécuté par un ou plusieurs processeurs, effectue une opération pour commander une production de puissance d'une centrale éolienne (WPP, 200) comprenant une pluralité d'éoliennes (WTG, 100, 100n), l'opération comprenant les étapes consistant à :
définir, sur la base d'informations relatives au vent reçues (240, 245), une zone de sillage de vent (232) comprenant un groupe de premières éoliennes de la pluralité d'éoliennes ; et
augmenter une production de puissance réactive d'au moins une des premières éoliennes de la zone de sillage de vent,
dans lequel une production de puissance réactive est augmentée pour au moins deux des une ou plusieurs premières éoliennes, dans lequel une quantité d'augmentation de puissance réactive des au moins deux des une ou plusieurs premières éoliennes est basée sur des puissances nominales actives relatives des au moins deux des une ou plusieurs premières éoliennes, de sorte qu'au moins deux des une ou plusieurs premières éoliennes disposées dans la zone de sillage de vent sont commandées pour fournir une puissance réactive relativement plus importante que les éoliennes à l'extérieur de la zone de sillage de vent (232).

8. Produit de programme informatique selon la revendication 7, dans lequel les informations relatives au vent (240, 245) comprennent des informations de vitesse de vent, l'opération comprenant en outre l'étape consistant à :
sélectionner les une ou plusieurs premières éoliennes sur la base d'une vitesse de vent correspondante inférieure à une vitesse de vent nominale des une ou plusieurs premières éoliennes.

9. Produit de programme informatique selon l'une quelconque des revendications précédentes, dans lequel les informations relatives au vent (240, 245) comprennent des informations de direction de vent, et dans lequel la zone de sillage de vent est définie par rapport à une ou plusieurs secondes éoliennes de la pluralité d'éoliennes.

10. Produit de programme informatique selon la revendication 10, dans lequel la zone de sillage de vent s'étend jusqu'à une distance prédéterminée en aval des une ou plusieurs secondes éoliennes.

11. Produit de programme informatique selon l'une quelconque des revendications précédentes, dans lequel les informations relatives au vent reçues (240, 245) comprennent une ou plusieurs d'une direction de vent mesurée et d'une direction de vent prévue.

12. Produit de programme informatique selon la revendication 11, dans lequel les informations relatives au vent reçues (240, 245) comprennent une direction de vent mesurée et une direction de vent prévue, dans lequel la définition de la zone de sillage de vent comprend les étapes consistant à :
définir une première zone de sillage de vent (232-1) correspondant à la direction de vent mesurée ; et
définir une seconde zone de sillage de vent (232-P2) correspondant à la direction de vent prévue, l'opération comprenant en outre les étapes consistant à :
sélectionner une ou plusieurs éoliennes de la pluralité d'éoliennes qui sont communes aux première et seconde zones de sillage de vent,
dans lequel l'augmentation d'une production de puissance réactive comprend une augmentation d'une production de puissance réactive d'au moins l'un des une ou plusieurs éoliennes sélectionnées.

13. Centrale éolienne (WPP, 200), comprenant :
une pluralité d'éoliennes (WTG, 100, 100n) ; et
un dispositif de commande de centrale éolienne configuré pour :
définir, sur la base d'informations relatives au vent reçues (240, 245), une zone de sillage de vent (232) comprenant un groupe de premières éoliennes de la pluralité d'éoliennes ; et
augmenter une production de puissance réactive d'au moins une des premières éoliennes de la zone de sillage de vent,
dans lequel une production de puissance réactive est augmentée pour au moins deux des une ou plusieurs premières éoliennes, dans lequel une quantité d'augmentation de puissance réactive des au moins deux des une ou plusieurs premières éoliennes est basée sur des puissances nominales actives relatives des au moins deux des une ou plusieurs premières éoliennes, de sorte qu'au moins deux des une ou plusieurs premières éoliennes disposées dans la zone de sillage de vent sont commandées pour fournir une puissance réactive relativement plus importante que les éoliennes à l'extérieur de la zone de sillage de vent (232).
